# EUROPÄISCHE PATENTSCHRIFT

(11) **EP 0 469 326 B1**
(45) Veröffentlichungstag und Bekanntmachung des Hinweises auf die Patenterteilung: **04.01.1995**
(21) Anmeldenummer: 91111105.2
(22) Anmeldetag: 04.07.1991
(51) Int. Cl.: B60R 21/13, B60R 22/18

(54) **Vorrichtung zum Strammen eines Sicherheitsgurtes**
Seat belt pretensioning device
Dispositif tendeur pour ceinture de sécurité

(30) Priorität: 03.08.1990 DE 4024691
(43) Veröffentlichungstag der Anmeldung: 05.02.1992
(73) Patentinhaber: AUDI AG, 85045 Ingolstadt (DE)
(72) Erfinder: Adickes, Henning, W-8070 Ingolstadt (DE); Krebs, Bernd, W-8071 Wettstetten (DE)
(74) Vertreter: Engelhardt, Harald

(56) Entgegenhaltungen:
- DE-A- 2 444 801
- DE-C- 3 410 676
- DE-U- 9 001 215

## Beschreibung

Die Erfindung bezieht sich auf ein Kraftfahrzeug mit mindestens einem Sitz und einem Überrollbügel gemäß den Oberbegriffen der Patentansprüche 1 und 2.

Ein Kraftfahrzeug gemäß dem Gattungsbegriff ist aus der DE-U-9 001 215 bekannt. Dadurch, daß bei der bekannten Anordnung der Überrollbügel in seiner Ruhelage in der Rückenlehne des Sitzes oder in einer mit der Rückenlehne verbundenen Kopfstütze untergebracht ist, sind an der Fahrzeugkarosserie selbst keine Maßnahmen erforderlich, um das Fahrzeug mit einem Überrollbügel ausrüsten zu können. Die fehlende Differenzierung zwischen Fahrzeugen, welche mit einem Überrollbügel ausgerüstet werden (Cabrios) und Fahrzeugen, für die kein Überrollbügel notwendig ist (Limousinen), erlaubt eine kostengünstige Fertigung. Ein weiterer Vorteil dieser bekannten Anordnung besteht darin, daß für den Überrollbügel kein zusätzlicher Bauraum beansprucht wird.

Aus der DE-U-9 001 215 ist ein Kraftfahrzeug mit mindestens einem Sitz und einem Überrollbügel bekannt, welcher durch eine Vorrichtung aus seiner Ruhelage in seine Wirkstellung bewegbar ist, und wobei an dem Überrollbügel ein Mitnehmer für den Sicherheitsgurt befestigt ist, welcher beim Bewegen des Überrollbügels in seine Wirkstellung den Sicherheitsgrut strammt.

Ausgehend von derartigen, mit einem Überrollbügel ausgerüsteten Fahrzeugsitzen liegt der Erfindung die Aufgabe zugrunde, durch einfache Maßnahmen die Strammung eines diesem Sitz zugeordneten Sicherheitsgurtes bei einem Unfall zu realisieren.

Die Aufgabe wird durch die Merkmale der Patentansprüche 1 oder 2 gelöst.

Beim Auslösen des Überrollbügels wird gleichzeitig durch einen mit ihm in Verbindung stehenden Mitnehmer der Sicherheitsgurt im Sinne einer Gurtstrammung nach oben gezogen. Der Sicherheitsgurt tritt durch eine auf der Vorderseite der Rückenlehne ausgeführte Aussparung in die Rückenlehne ein. Wenn diese Aussparung durch geeignete Maßnahmen verstärkt ist, dann bleibt die Lage des Sicherheitsgurtes zu dem Sitzbenutzer auch dann erhalten, wenn der Sicherheitsgurt bei Auslösung des Überrollbügels gestrammt wird.

Zwischen der Aussparung und der in der Rückenlehne angeordneten Aufwickelvorrichtung für den Sicherheitsgurt sind zwei Umlenkeinrichtungen für den Sicherheitsgurt vorgesehen. Der mit dem Überrollbügel in Verbindung stehende Mitnehmer ist zwischen den Umlenkeinrichtungen angeordnet. Die Umlenkeinrichtungen können in einfacher Weise durch Bolzen mit einer reibungsreduzierenden Oberfläche gebildet sein. Bei dieser Ausgestaltung ist es nicht notwendig, daß die Aussparung festigkeitsmäßig in besonderer Weise ausgebildet ist.

Beim Aktivieren der Vorrichtung drückt oder zieht der Mitnehmer das Gurtband zwischen den beiden Umlenkeinrichtungen flaschenzugartig nach oben und führt somit eine Strammung des Sicherheitsgurtes durch.

Der Mitnehmer kann an der den Überrollbügel betätigenden Vorrichtung oder an dem Überrollbügel selbst ausgebildet sein. Als Überrollbügel ist schließlich auch die Kopfstütze selbst denkbar, wenn diese selbsttätig ausfahrbar konzipiert ist. Sie steht dann in ihrer Funktion als Kopfstütze nicht mehr voll zur Verfügung, so daß diese Ausgestaltung nur in besonderen Fällen zweckmäßig erscheint.

Ein Ausführungsbeispiel der Erfindung ist in der Zeichnung dargestellt und wird nachfolgend näher beschrieben. Es zeigt
- Fig. 1: in Vorderansicht einen Fahrzeugsitz mit einem in der Kopfstütze des Fahrzeugsitzes integrierten Überrollbügel,
- Fig. 2: den Fahrzeugsitz aus Fig. 1, wobei der Überrollbügel aus der Kopfstütze herausbewegt ist und
- Fig. 3: in Seitenansicht einen Längsschnitt durch den oberen Bereich des Fahrzeugsitzes.

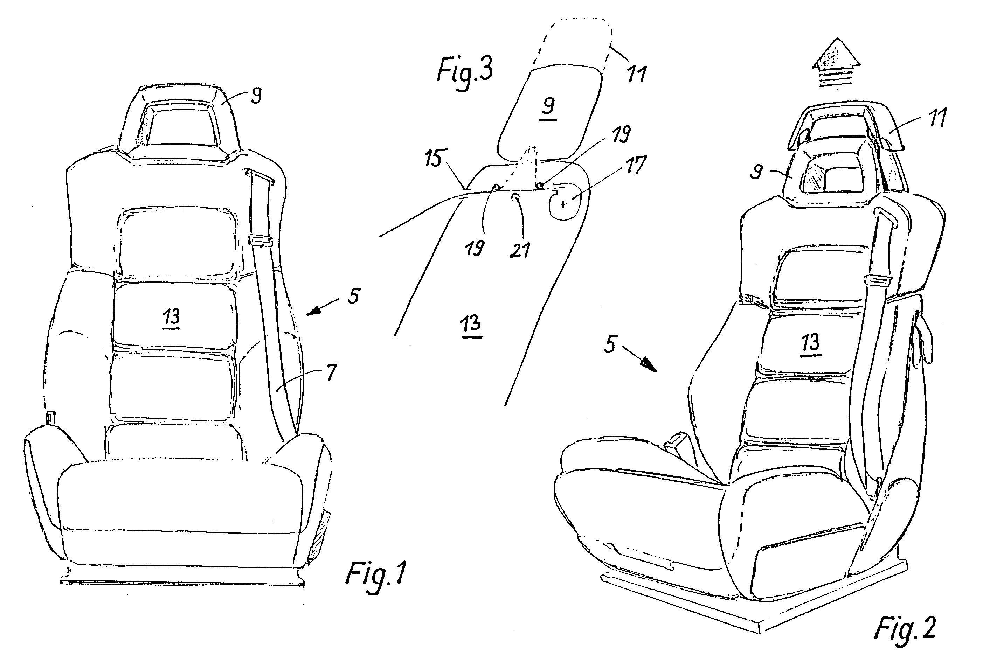

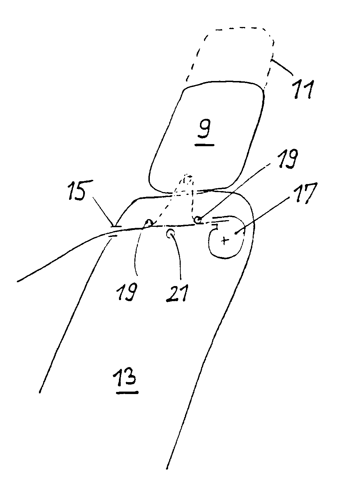

Ein in Fig. 1 dargestellter Sitz 5 für einen Kraftwagen in Cabrio-Bauweise ist mit einem am Sitz angelenkten Sicherheitsgurt 7 und einer Kopfstütze 9 versehen.

Wie die Fig. 2 deutlich zeigt, läßt sich aus der Kopfstütze 9 entlang einer Geradführung (in der Zeichnung nicht erkennbar) ein Überrollbügel 11 herausbewegen. In der herausbewegten Stellung erfolgt eine selbsttätige Arretierung des Überrollbügels 11, so daß dieser in Verbindung mit einer entsprechend verstärkten Rückenlehne 13 des Sitzes 5 belastbar ist.

Die Auslösung der Vorrichtung (nicht dargestellt) zum Herausbewegen des Überrollbügels 11 erfolgt selbsttätig, wenn die dafür vorgesehenen Voraussetzungen vorliegen. Diese Voraussetzungen werden durch entsprechende, an sich bekannte Sensoren erfaßt, welche nicht nur bei einer Kollision reagieren, sondern auch verhältnismäßig langsame Überschläge des Fahrzeuges erfassen und das Herausbewegen des Überrollbügels 11 auslösen.

Die Schnittdarstellung in Fig. 3 zeigt den Überrollbügel 11 in Ruhestellung und in Wirkstellung (gestrichelt dargestellt). In Fig. 3 ist auch der Verlauf des Sicherheitsgurtes 7 in der Rückenlehne 13 des Sitzes 5 dargestellt. Der Sicherheitsgurt 7 ist durch eine Aussparung 15 an der Vorderseite der Rückenlehne 13 in die Rückenlehne 13 hineingeführt und wird dort von einer Aufwikkelvorrichtung 17 aufgenommen. Zwischen der Aussparung 15 und der Aufwickelvorrichtung 17 sind in Abstand zueinander zwei an der Rückenlehne 13 fixierte Bolzen 19 vorgesehen. Wie Fig. 3 unmittelbar zeigt, erstrecken sich die beiden Bolzen 9 über dem Sicherheitsgurt 7. Zwischen den beiden Bolzen 19, jedoch unter dem Sicherheitsgurt 7 befindet sich ein Mitnehmer 21, welcher unmittelbar an der Vorrichtung zum Herausbewegen des Überrollbügels 11 befestigt ist.

Wenn nun der Überrollbügel 11 herausbewegt wird, dann drückt der Mitnehmer 21 den Sicherheitsgurt zwischen den beiden Bolzen 19 nach oben (gestrichelt dargestellt). Der gestrichelt dargestellte Abschnitt des Sicherheitsgurtes 7, vermindert um den Abstand zwischen den beiden Bolzen 19, stellt die Länge dar, um welche der Sicherheitsgurt gestrammt wird.

## Patentansprüche

1. Kraftfahrzeug mit mindestens einem Sitz (5) und einem Überrollbügel, welcher durch eine Vorrichtung aus seiner Ruhelage in der Rückenlehne (13) des Sitzes (5) in seine Wirkstellung bewegbar ist, wobei auf der Vorderseite der Rückenlehne (13) ein Abschnitt eines Sicherheitsgurtes (7) für eine auf dem Sitz (5) untergebrachte Person verläuft, der Sicherheitsgurt (7) im Bereich der Oberkante der Rückenlehne (13) durch eine Aussparung (15) auf der Vorderseite der Rückenlehne (13) in diese eintritt und in einer in der Rückenlehne (13) angeordneten Aufwickelvorrichtung (17) mündet, **dadurch gekennzeichnet,** daß zwischen der Aussparung (15) und der Aufwickelvorrichtung (17) in der Rückenlehne (13) zwei Umlenkeinrichtungen (19) für den Sicherheitsgurt (7) vorgesehen sind, und daß zwischen den Umlenkstellen an der Vorrichtung oder dem Überrollbügel ein Mitnehmer (21) für den Sicherheitsgurt (7) befestigt ist, derart, daß dieser den Sicherheitsgurt (7) beim Bewegen des Überrollbügels in seine Wirkstellung im Sinne einer Gurtstrammung nach oben zieht.

2. Kraftfahrzeug mit mindestens einem Sitz (5), welcher mit einer Kopfstütze (9) und einem Überrollbügel (11) ausgerüstet ist, wobei der Überrollbügel (11) durch eine Vorrichtung aus seiner Ruhelage in der Kopfstütze (9) in seine Wirkstellung bewegbar ist, und wobei auf der Vorderseite der Rückenlehne (13) ein Abschnitt eines Sicherheitsgurtes (7) für eine auf dem Sitz (5) untergebrachte Person verläuft, der Sicherheitgurt (7) im Bereich der Oberkante der Rückenlehne (13) durch eine Aussparung (15) auf der Vorderseite der Rückenlehne (13) in diese eintritt und in einer in der Rückenlehne angeordneten Aufwickelvorrichtung (17) mündet, **dadurch gekennzeichnet,** daß zwischen der Aussparung (15) und der Aufwickelvorrichtung (17) in der Rückenlehne (13) zwei Umlenkeinrichtungen (19) für den Sicherheitsgurt (7) vorgesehen sind, und daß zwischen den Umlenkstellen an der Vorrichtung oder dem Überrollbügel ein Mitnehmer (21) für den Sicherheitsgurt (7) befestigt ist, derart, daß dieser den Sicherheitsgurt (7) beim Bewegen des Überrollbügels in seine Wirkstellung im Sinne einer Gurtstrammung nach oben zieht.

## Claims

1. Motor vehicle having at least one seat (5) and a roll bar which is adapted to be moved by a mechanism from its rest position in the seat back (13) of the seat (5) and into its operational position, there extending on the front face of the seat back (13) a section of a safety belt (7) for a person accommodated on the seat (5), and the safety belt (7) passing, near the top edge of the seat back (13), into said seat back (13) through a recess (15) on the front face thereof and opening out in a retractor mechanism (17) disposed in the seat back (13), **characterised in that** between the recess (15) and the retractor mechanism (17) in the seat back (13) there are provided two reversing mechanisms (19) for the safety belt (7), and that between the reversal points a driving dog (21) for the safety belt (7) is fastened to the mechanism or to the roll bar, in such a manner that when the roll bar moves, said driving dog (21) draws the safety belt (7) up into its operational position so as to tension the belt.

2. Motor vehicle having at least one seat (5) which is fitted with a head restraint (9) and a roll bar (11), the roll bar (11) being adapted to be moved by a mechanism from its rest position in the head restraint (9) and into its operational position, there extending on the front face of the seat back (13) a section of a safety belt (7) for a person accommodated on the seat (5), and the safet belt (7) passing, near the top edge of the seat back (13), into said seat back (13) through a recess (15) on the front face thereof and opening out in a retractor mechanism (17) disposed in the seat back, **characterised in that** between the recess (15) and the retractor mechanism (17) in the seat back (13) there are provided two reversing mechanisms (19) for the safety belt (7), and that between the reversal points a driving dog (21) for the safety belt (7) is fastened to the mechanism or to the roll bar, in such a manner that when the roll bar moves, said driving dog (21) draws the safety belt (7) up into its operational position so as to tension the belt.

## Revendications

1. Véhicule automobile comportant au moins un siège (5) et un arceau de sécurité qui peut être placé dans sa position active par un mécanisme, à partir de sa position de repos dans le dossier (13) du siège (5), une partie d'une ceinture de sécurité (7) pour une personne occupant le siège (5) passant sur la face avant du dossier (13), la ceinture de sécurité (7) passant, dans la région du bord supérieur du dossier (13), à travers un évidement (15) sur la face avant du dossier (13) pour pénétrer dans celui-ci et se terminer dans un dispositif d'enroulement (17) placé dans le dossier (13), caractérisé en ce qu'il est prévu dans le dossier (13), entre l'évidement (15) et le dispositif d'enroulement (17), deux dispositifs de renvoi (19) pour la ceinture de sécurité (7), et en ce qu'il est fixé au mécanisme ou à l'arceau de sécurité, entre les points de renvoi, un élément d'entraînement (21) pour la ceinture de sécurité (7), de telle manière que cet élément tire vers le haut la ceinture de sécurité, dans le sens d'un raidissement de celle-ci, lors du déplacement de l'arceau de sécurité dans sa position active.

2. Véhicule automobile comportant au moins un siège (5) qui est équipé d'un appuie-tête (9) et d'un arceau de sécurité (11), l'arceau de sécurité (11) pouvant être placé dans sa position active par un mécanisme, à partir de sa position de repos dans l'appuie-tête (9), et une partie d'une ceinture de sécurité (7) pour une personne occupant le siège (5) passant sur la face avant du dossier (13), la ceinture de sécurité (7) passant, dans la région du bord supérieur du dossier (13), à travers un évidement (15) sur la face avant du dossier (13) pour pénétrer dans celui-ci et se terminer dans un dispositif d'enroulement (17) placé dans le dossier, caractérisé en ce qu'il est prévu dans le dossier (13), entre l'évidement (15) et le dispositif d'enroulement (17), deux dispositifs de renvoi (19) pour la ceinture de sécurité (7), et en ce qu'il est fixé au mécanisme ou à l'arceau de sécurité, entre les points de renvoi, un élément d'entraînement (21) pour la ceinture de sécurité (7), de telle manière que cet élément tire vers le haut la ceinture de sécurité, dans le sens d'un raidissement de celle-ci, lors du déplacement de l'arceau de sécurité dans sa position active.
